# FASCICULE DE BREVET EUROPEEN

(11) **EP 1 062 566 B1**
(45) Date de publication et mention de la délivrance du brevet: **13.09.2006**
(21) Numéro de dépôt: 00900096.9
(22) Date de dépôt: 14.01.2000
(51) Int. Cl.: G06F 3/033

(54) **PROCEDE DE NAVIGATION EN IMAGE DE SYNTHESE 3D PAR LA MANIPULATION D'IMAGE 3D "NAVIGATION HYPER 3D"**
VERFAHREN ZUR NAVIGATION IN EINEM SYNTHETISCHEN 3D-BILD DURCH 3D-BILDMANIPULATION, "HYPER-3D-BROWSER"
NAVIGATION METHOD IN 3D COMPUTER-GENERATED PICTURES BY HYPER 3D NAVIGATOR 3D IMAGE MANIPULATION

(30) Priorité: 15.01.1999 FR 9900395
(43) Date de publication de la demande: 27.12.2000
(73) Titulaire: Z.A. Production, 75011 Paris (FR)
(72) Inventeur: BENAYOUN, Maurice, F-75004 Paris (FR)
(74) Mandataire: Kügele, Bernhard
(86) Numéro de dépôt international: PCT/IB2000/000040
(87) Numéro de publication internationale: WO 2000/042495

(56) Documents cités:
- EP-A- 0 767 418
- US-A- 5 515 486
- US-A- 5 678 015

## Description

La présente invention concerne un procédé de navigation en images de synthèse 3D. Le domaine est la manipulation d'images 3D . C'est un dispositif technique de sélection d'un fichier numérique ou d'une séquence audiovisuelle par la manipulation d'un objet 3D virtuel.

Les interfaces traditionnelles de navigation informatique fonctionnent actuellement sur une représentation plane.

Les documents D1: US-A-5 678 015 (GOH ENG LIM), 14 octobre 1997, D2: EP-A-0 767 418 (SONY CORP), 9 avril 1997, et D3: US-A-5 515 486 (AMRO HATIM Y ET AL), 7 mai 1996, décrivent chacun un procédé/système dans lequel une interface graphique présente à l'utilisateur un objet 3D sur les faces duquel sont représentées des fenêtres contenant des objets sélectionnables, l'objet 3D étant manipulable en rotation au moyen d'un dispositif de pointage.

La technique de D1 visualise un objet 3D, chacun des espace de travail sélectionnés par l'utilisateur étant mappé sur une des faces polygonales simultanément visibles, permettant ainsi une meilleure utilisation de l'espace de travail disponible. Le polyèdre tourne sous le contrôle de l'utilisateur pour lui présenter chaque face, le point de vue (externe ou même interne) pouvant être choisi. L'utilisateur sélectionne un des éléments présentés sur l'une des faces, par exemple pour lancer une application correspondant à un icône. Cependant, rien n'indique que la rotation peut se faire selon trois axes, ni que le curseur soit différent d'un curseur conventionnel (clicking pendant que le curseur est positionné au-dessus de l'élément à sélectionner).

D2 propose, selon l'un des modes de réalisation, de disposer des éléments sélectionnables sur la surface intérieure d'un cylindre, représentée en 3D sur l'écran, le défilement par rotation du cylindre se faisant à vitesse variable ; la sélection d'un élément peut être obtenue par alignement avec le centre de l'écran (Fig. 15). Cependant il s'agit là d'un centrage dans la direction horizontale seulement, et sur un objet à un seul axe de rotation (cylindre). Suivant un autre mode de réalisation (Fig. 26 et colonne 13), les éléments sont présentés sur des surfaces polygonales formant une pseudo-surface courbe 3D vue depuis son centre. Rien ne suggère une représentation vue de l'extérieur (convexe), ni la sélection d'un élément par superposition avec le centre de l'écran.

D3, enfin, propose aussi l'affichage à l'écran d'un polyèdre, que l'on peut faire tourner suivant plusieurs axes, et qui est vu depuis l'extérieur (donc vu comme convexe). Cependant, le panneau actuellement sélectionné est vu de face, et les trois possibilités de rotation mentionnées sont en horizontal, en vertical et en diagonal; de plus, ces rotations se font par incrément (pour amener le prochain panneau de face à l'écran) et il n'est mentionné que le mode de sélection classique d'un élément, par positionnement du pointeur au-dessus de lui et click.

Une manipulation en 3D permet d'accéder plus rapidement à de très nombreuses données aux arborescences complexes et exponentielles, et par une interface intuitive. La présente invention ne requiert aucune dextérité de navigation (type simulateur de vol).

Sur les faces de ce volume 3D sont affichées des images, des adresses de fichiers ou des séquences audiovisuelles (ou leurs représentations). Un dispositif de pointage (track-ball, souris, joystick) permet à l'utilisateur de manipuler le volume 3D, comme si nous tournions un cube dans notre main.

On positionne l'élément à sélectionner sur la zone centrale de l'écran d'affichage graphique ou vidéo. La zone centrale est indiquée par une surbrillance. La validation de la sélection est effectuée par un click sur un bouton du dispositif de pointage. Suivant le cas, le click déclenchera l'affichage soit du cube suivant, soit d'un fichier numérique, un texte, une image ou une interface 2D.

Nous décrivons la présente invention par rapport à un cube mais elle est applicable à tous les volumes 3D (exemple : un téléphone portable, une mappemonde, ...).

Le centre du cube est fixe. Le cube dispose des trois degrés de liberté en rotation (axes x, y et z), mais d'aucun degré de liberté en translation. Le cube est manipulé en temps réel.

Nous pouvons tourner le cube comme on feuillette un livre.

### Applications industrielles :

Le navigateur 3D. a de multiples applications :
- Interface utilisateur pour le Web,
- Guide de programme interactif pour les programmes de télévision,
- Le multimédia avec accès direct à une sélection,
- Exploration du disque dur ou de la mémoire de masse d'une station informatique,
- Bornes interactives de présentation,
- Menus interactifs pour appareils électroniques disposant d'un écran d'affichage intégré.
- Mode d'emploi interactif pour tout appareil équipé d'un écran de visualisation (recherche de la fonction d'un élément de commande par exemple).

L'interface comprend 2 parties intimement liées :
- l'objet tridimensionnel de sélection de contenu multimédia (un CUBE par exemple)
- une interface utilisateur bi-dimensionnelle synchronisée avec la 1^{ère} partie.

### 1/ La partie 3D (les cubes)

Structure fondée sur une série de cubes concentriques.

Navigation par croissance et rotation des cubes. Leurs centres communs et le point de vue de l'observateur restent fixes.

Réorientation automatique de chaque face de cube en fonction de sa rotation pour une bonne lisibilité des informations (sens de lecture).

Le cube est un mode de structuration de l'information exemple de découpage :
- cube = ensemble de thèmes ou de répertoires,
- face = thème,
- image ou texte sur la face = sous-thème.

Sélection par un pointeur central fixe.

Lorsqu'un objet (image par exemple) est aligné sur le pointeur, un titre ou une nouvelle image apparaît).

A chaque objet est associé un lien.

La sélection déclenche l'opération (par exemple : venue de l'image plein écran et transition avec la partie 2D).

Organisation dynamique du contenu assistée par l'analyse des préférences, des habitudes de travail, ou de la fréquence des accès.

Compatibilité avec toute forme de contenu multimédia : programme TV (variante HyperTV) Internet réseau (HyperWeb) multimédia réseau ou support optique, applications interactives...

### 2/ Partie 2D (les volets)

A l'opposé du fonctionnement des interfaces fondées sur la fenêtre (type Windows), la partie 2D de l'interface utilise le volet comme support d'information. L'ensemble des volets se réorganise de manière dynamique pour définir les cadres d'affichage des média audiovisuels.

Chaque élément sur l'écran est une zone active (volet, pastilles mobiles...).

Réactualisation du contenu affiché y compris à partir de données provenant du réseau.

Sélection des sujets par pastilles mobiles recouvrant des icônes signalant la nature du document.

Les dessins annexés illustrent l'invention :

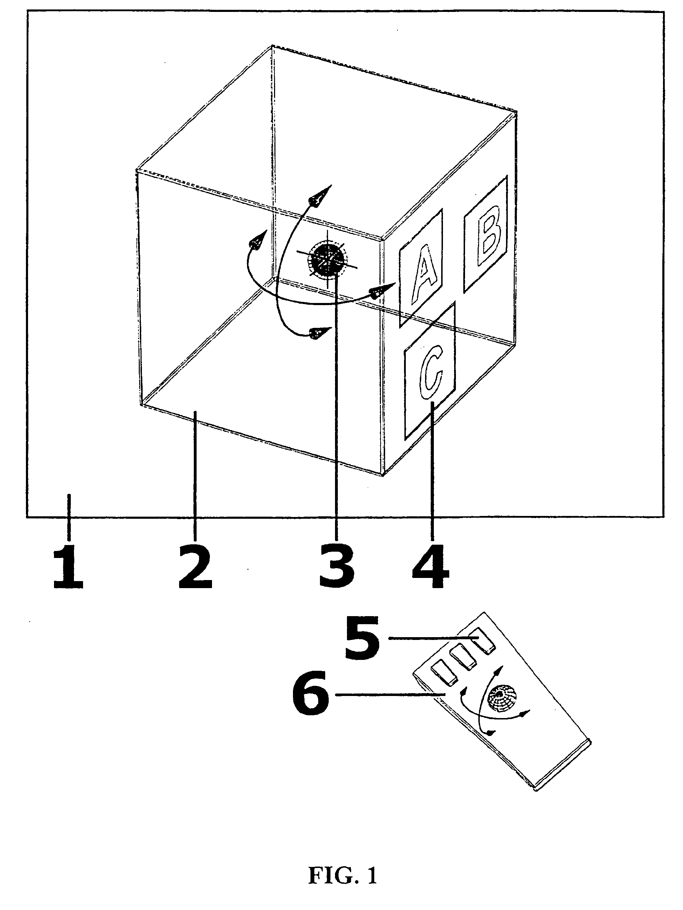

La figure 1 représente le dispositif de navigation.

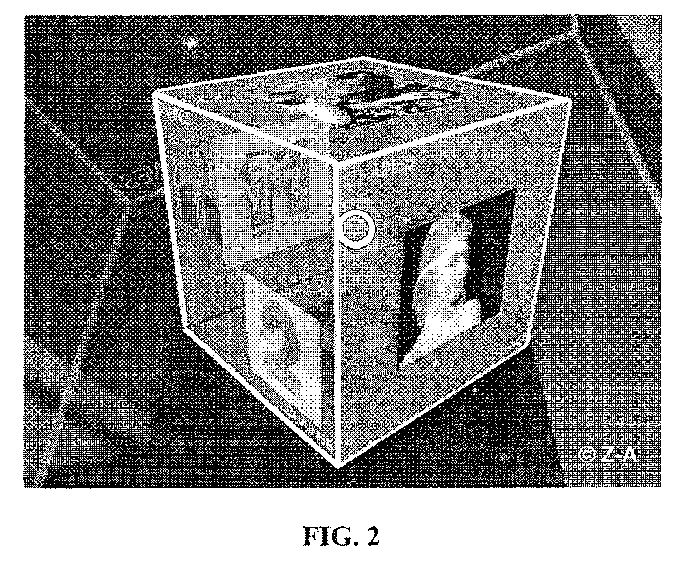

la figure 2 représente une application, à titre d'exemple, du présent navigateur 3D dédiée à un « guide de programme interactif pour les chaînes de télévision ».

En référence à ces dessins, le dispositif comporte un écran d'affichage (1) sur lequel est affiché un objet 3D, un cube (2) pour simplifier sur notre exemple. Le centre du cube est confondu avec le centre de l'écran. La zone centrale de l'écran est symbolisée par une pastille en surbrillance (3). Les éléments que l'on peut sélectionner (4), sont affichés sur les faces du cube (référence d'un fichier numérique, images, élément graphique, ...). Le dispositif de pointage (6) (trackball, souris, joystick) permet de manipuler le volume 3D en temps réel et d'afficher l'élément sélectionné sur la surbrillance centrale (3). S'il s'agit d'une séquence audiovisuelle, le positionnement de la sélection (4) sur la zone centrale en surbrillance (3) déclenchera le flux animé des images. Dans ce cas, il est possible de visualiser dans la fenêtre de sélection (4) le film avant sa sélection.

Un click sur un bouton de commande (5) déclenche l'activation de la sélection et l'affichage plein écran d'un film, d'une image ou de tout fichier numérique. Dans le cas d'arborescence complexes à plusieurs niveaux, on accèdera au cube suivant. Les cubes peuvent être emboîtés de façon concentrique et permettre une navigation extrêmement rapide.

A titre d'exemple, des cubes affichant 4 éléments par face contiennent 24 éléments sélectionnables. En 2 clicks successifs nous pourrions sélectionner 1 élément parmi 576. Nous sommes dans une fonction exponentielle de type : (6X)ⁿ où "X" est le nombre d'éléments par face et "n" le nombre de niveaux de l'arborescence. Les faces des cubes peuvent toutefois contenir un nombre différent d'éléments sélectionnables.

En résumé, la présente invention concerne un procédé de navigation en image de synthèse 3D caractérisé en ce qu'il comporte un volume 3D, volume dont le centre est fixe et confondu avec le centre de la surface d'affichage du dispositif et symbolisé par un repère graphique : "le pointeur", volume sur les faces duquel sont affichées les représentations des éléments sélectionnables "les objets", volume que l'on manipule en temps réel dans les trois degrés de liberté en rotation (mais aucun en translation) grâce à un dispositif de pointage (6) afin de positionner l'élément choisi sur le pointeur, un titre peut éventuellement s'afficher en phase de présélection. La sélection est déclenchée par un click sur un bouton du dispositif de pointage (trackball, souris, joystick). Les éléments sélectionnables sont représentés par une image fixe ou animée, un élément graphique ou textuel issu d'un fichier numérique. A chaque objet est associé un lien. Le point de vue de l'observateur est fixe.

Selon un mode de réalisation particulier de la présente invention, un élément sélectionné sur une des faces du volume 3D peut donner accès à un nouveau volume 3D concentrique qui lui-même disposera d'éléments sélectionnables sur ses faces, permettant de naviguer de volume en volume jusqu'au niveau recherché de l'arborescence.

Selon un autre mode de réalisation de la présente invention, un élément sélectionné donnera accès à l'affichage de cet élément en aplat sur l'écran ou à l'ouverture d'un fichier de données numérique de façon synchronisée. L'opération peut conduire à l'affichage d'une image, d'un film vidéo en plein écran, d'une page web ou une application multimédia.

Selon un mode de réalisation de la présente invention, un élément sélectionné pourra donner accès à une nouvelle interface de navigation.

Selon un mode de réalisation de la présente invention, l'organisation des éléments affichés sur les faces du volume 3D pourra être générée dynamiquement à partir de l'analyse des préférences de l'utilisateur.

Selon un mode de réalisation de la présente invention, dans le cas d'un volume 3D simple de type cube, on a accès à une fonction de réorientation automatique de chaque face en fonction de sa rotation pour une bonne lisibilité des informations (sens de lecture).

Selon un mode de réalisation de la présente invention, le navigateur 3D pourra recevoir des informations de réactualisation du contenu à partir de données provenant d'un réseau.

Selon un mode de réalisation de la présente invention, le navigateur 3D pourra recevoir des informations de flux d'un contenu multimédia à partir de données provenant d'un réseau, et de les exploiter afin de permettre une navigation au travers des différentes composantes du flux en temps réel.

Selon un mode de réalisation de la présente invention, une vidéo positionnée sur le pointeur central s'anime dans sa zone de sélection et avant sa sélection par un click.

## Revendications

1. Procédé de sélection et d'affichage d'un élément de type fichier numérique, image fixe ou images animées, sur un écran d'affichage (1), grâce à un dispositif de pointage et de sélection (6) comportant un bouton de commande (5), via un pointeur (3) affiché sur ledit écran, **caractérisé en ce qu'**il comporte les étapes suivantes :
affichage sur ledit écran (1) d'un objet à trois dimensions (2) comportant plusieurs faces, dont au moins une face comporte au moins une fenêtre de représentation (4) d'un premier élément à sélectionner et à afficher, ladite fenêtre de représentation comportant un lien avec ledit élément à sélectionner et à afficher ;
manipulation de l'objet à trois dimensions (2) sur l'écran (1) dans trois degrés de liberté (x,y,z) en rotation autour du centre fixe (3) dudit objet à trois dimensions, ce centre correspondant audit pointeur, la rotation étant obtenue par la manipulation dudit dispositif de pointage (6) ; et
sélection de ladite représentation (4) dudit élément à afficher par son positionnement, au moyen de la manipulation du dispositif de pointage (6), en superposition avec ledit pointeur correspondant au centre dudit objet à trois dimensions (2), et affichage sur ledit écran d'affichage dudit élément sélectionné par la pression sur ledit bouton de commande (5) dudit dispositif de pointage (6).

2. Procédé de sélection et d'affichage d'un élément de type fichier numérique, images fixes ou animées, selon la revendication 1, **caractérisé en ce que** ledit objet à trois dimensions est un cube à six faces.

3. Procédé de sélection et d'affichage d'un élément de type fichier numérique, images fixes ou animées, selon la revendication 1 ou 2, **caractérisé en ce que** ladite au moins une fenêtre de représentation (4) contient une image fixe, une succession d'images animées, un objet graphique ou un texte.

4. Procédé de sélection et d'affichage d'un élément de type fichier numérique, images fixes ou animées, selon l'une quelconque des revendications 1 à 3, **caractérisé en ce que** ledit élément à sélectionner et à afficher est un second objet à trois dimensions du même type que celui de la revendication 1, et ayant les mêmes fonctions que celles de celui de la revendication 1, dont au moins une face comporte au moins une fenêtre de représentation (4) d'un second élément à sélectionner et à afficher, ladite fenêtre de représentation comportant un lien avec ledit second élément à sélectionner et à afficher.

5. Procédé de sélection et d'affichage d'un élément de type fichier numérique, images fixes ou animées, selon l'une quelconque des revendications précédentes, **caractérisé en ce que** la sélection de l'élément est stockée en mémoire afin de permettre de déterminer électroniquement les préférences de l'utilisateur et de réorganiser le contenu des fenêtres de représentations sur ledit objet à trois dimensions en fonction des préférences de l'utilisateur.

6. Procédé de sélection et d'affichage d'un élément de type fichier numérique, images fixes ou animées, selon l'une quelconque des revendications précédentes, **caractérisé en ce qu'**un élément à sélectionner et à afficher est un fichier vidéo dont les images s'animent seulement lorsque sa dite fenêtre de représentation est superposée avec ledit pointeur fixe (3).

7. Procédé de sélection et d'affichage d'un élément de type fichier numérique, images fixes ou animées, selon l'une quelconque des revendications précédentes, **caractérisé en ce que** ledit pointeur fixe au centre de l'objet à trois dimensions est affiché au centre de l'écran d'affichage (1).

8. Dispositif de sélection et d'affichage comportant des moyens adaptés à la mise en oeuvre de chacune des étapes du procédé de sélection et d'affichage d'un élément selon l'une quelconque des revendications précédentes,
comportant un écran d'affichage (1), un dispositif de pointage et de sélection (6) comportant un bouton de commande (5) permettant la sélection et l'affichage dudit élément en superposant la fenêtre de représentation de celui-ci sur le pointeur fixe au centre dudit objet à trois dimensions.

9. Dispositif de sélection et d'affichage selon la revendication 8, **caractérisé en ce que** le dispositif de pointage est une souris, un joystick ou un trackball.

## Claims

1. Method of selecting and displaying an item, of the digital file-type, a fixed image type or an animated image type, on a display screen (1), using a pointing and selecting device (6) including a control button (5), by way of a pointer (3) displayed on said screen, **characterised in that** the method comprises the steps of:
displaying, on said screen (1), a multifaceted three dimensional object (2), of which at least one facet includes at least a representative window (4) of a first item to be selected and displayed, said representative window including a link to said item to be selected and displayed;
manipulating the three dimensional object (2) on the screen (1) with respect to three free orthogonal axes (x, y, z), by the rotation around the fixed center (3) of said three dimensional object, this center corresponding to said pointer, the rotation being obtained by the manipulation of said pointing device (6); and
selecting said representation (4) of said item to be displayed by its positioning, by way of the manipulation of the pointing device (6), by superposition with said corresponding pointer device (6) at the center of said three dimensional object (2), and displaying on said display screen said selected item by pushing said control button (5) of said pointing device (6).

2. A method of selecting and displaying an item of the digital file-type, a fixed image type or an animated image type, according to claim 1, **characterised in that** said three dimensional object is a six sided cube.

3. A method of selecting and displaying an item of the digital file-type, a fixed image type or an animated image type, according to claim 1 or 2, **characterised in that** said at least one representative window (4) contains a fixed image, a succession of 35 animated images, a graphical object, or text.

4. A method of selecting and displaying an item of the digital file-type, a fixed image type or an animated image type, according to anyone of claims 1 to 3, **characterised in that** said item to be selected and displayed is a second three dimensional object of the same type as the one in claim 1, and having the same functions as the one in claim 1, at least one face of which includes at least one representative window (4) of a second item to be selected and displayed, said representative window including a link with said second item to be selected and displayed.

5. A method of selecting and displaying an item of the digital file-type, a fixed image type or an animated image type, according to anyone of the preceding claims, **characterised in that** the selection of the item is stored in memory so as to enable electronic determination of the users preferences and to reorganize the representative windows' contents on said three dimensional object as a function of the user's preferences.

6. A method of selecting and displaying an item of the digital file-type, a fixed image type or an animated image type, according to anyone of the preceding claims, **characterised in that** an item to be selected and displayed is a video file whose images activate only when its said representative window is superimposed with the said fixed pointer.

7. A method of selecting and displaying an item of the digital file-type, a fixed image type or an animated image type, according to anyone of the preceding claims, **characterised in that** said fixed pointer at the center of the three dimensional object is displayed at the center of the display screen.

8. A selection and display device comprising means adapted for the implementation of each step of the selection and display method for an item according to anyone of the preceding claims,
comprising: a display screen (1), a pointing and selecting device (6) having a control button (5) enabling the selection and display of said item by superimposing its representative window on the fixed pointer at the center of said three dimensional object.

9. A selection and display device according to claim 8, wherein the pointing device is a mouse, joystick, or trackball.

## Patentansprüche

1. Verfahren zum Auswählen und Anzeigen eines Elements des Typs eines digitalen Eintrags oder feststehender oder beweglicher Bilder, auf einem Anzeigeschirm (1), mit Hilfe einer Anwahl- und Auswählvorrichtung (6) mit einer Kontrolltaste (5), über einen Zeiger (3) der auf dem Schirm angezeigt ist, **gekennzeichnet durch** die folgenden Schritte:
Anzeigen auf dem Schirm (1) eines dreidimensionlaen, mehrere Seiten aufweisenden Objektes (2), wobei mindestens eine Seite mindestens ein Darstellungsfenster (4) für ein auszuwählendes und anzuzeigendes erstes Objekt aufweist, und wobei das Darstellungsfenster eine Verbindung mit dem auszuwählenden und anzuzeigenden Elements aufweist;
Manipulieren des dreidimensionalen Objekts (2) am Schirm (1) entsprechend drei Freiheitsgraden (x,y,z) in Rotation um das feststehende Zentrum (3) des dreidimensionalen Objekts, wobei das Zentrum dem Zeiger entspricht und wobei die Rotation **durch** Manipulieren der Zeigereinrichtung (6) erhalten wird; und
Auswählen der Darstellung (4) des anzuzeigenden Elements **durch** seine Positionierung, mittels Manipulieren der Zeigereinrichtung (6), in eine mit dem entsprechenden Zeiger überlagerten Lage im Zentrum des dreidimensionalen Objekts (2), und Anzeigen auf dem Anzeigeschirm des ausgewählten Elements **durch** Drücken der Kontolltaste (5) der Anwahlvorrichtung (6).

2. Verfahren zum Auswählen und Anzeigen eines Elements des Typs eines digitalen Eintrags oder feststehender oder beweglicher Bilder nach Anspruch 1, **dadurch gekennzeichnet, dass** das dreidimensionale Element ein sechs Seiten aufweisender Würfel ist.

3. Verfahren zum Auswählen und Anzeigen eines Elements des Typs eines digitalen Eintrags oder feststehender oder beweglicher Bilder nach Anspruch 1 oder 2, **dadurch gekennzeichnet, dass** das mindestens eine Darstellungsfenster (4) ein feststehendes Bild, eine Folge von bewegten Bildern, ein graphisches Objekt oder einen Text beinhaltet.

4. Verfahren zum Auswählen und Anzeigen eines Elements des Typs eines digitalen Eintrags oder feststehender oder beweglicher Bilder nach irgend einem derAnsprüche 1-3, **dadurch gekennzeichnet, dass** das auszuwählende und anzuzeigende Element ein zweites dreidimensionales Objekt des gleichen Typs und mit gleichen Funktionen wie das des Anspruchs 1 ist, von dem mindestens eine Seite mindestens ein Darstellungsfenster (4) eines zweiten auszuwählenden und anzuzeigenden Elements aufweist, wobei dieses Darstellungsfenster eine Verbindung mit dem zweiten auszuwählenden und anzuzeigenden Element aufweist.

5. Verfahren zum Auswählen und Anzeigen eines Elements des Typs eines digitalen Eintrags oder feststehender oder beweglicher Bilder nach irgend einem der vorhergehenden Ansprüche, **dadurch gekennzeichnet, dass** die Auswahl des Elements in einem Speicher gehalten wird, um auf elektronische Weise die Präferenzen des Benützers festzulegen, und den Inhalt der Darstellungsfenster bezüglich des dreidimensionalen Objekts in Abhängigkeit der Präferenzen des Benützers zu reorganisieren.

6. Verfahren zum Auswählen und Anzeigen eines Elements des Typs eines digitalen Eintrags oder feststehender oder beweglicher Bilder nach irgend einem der vorhergehenden Ansprüche, **dadurch gekennzeichnet, dass** ein auzuwählendes und anzuzeigendes Element ein Videoeintrag ist, dessen Bilder sich nur bewegen, wenn sein bezeichnetes Darstellungsfenster mit dem bezeichneten feststehenden Zeiger (3) überlagert ist.

7. Verfahren zum Auswählen und Anzeigen eines Elements des Typs eines digitalen Eintrags oder feststehender oder beweglicher Bilder nach irgend einem der vorhergehenden Ansprüche, **dadurch gekennzeichnet, dass** der bezeichnete feststehende Zeiger im Zentrrum des dreidimensionalen Objekts im Zentrum des Anzeigeschirms (1) angezeigt wird.

8. Vorrichtung zum Auswählen und Anzeigen mit passenden Mitteln zum Ausführen jedes einzelnen der Schritte des Verfahren zum Auswählen und Anzeigen eines Elements nach irgend einem der vorhergehenden Ansprüche,
mit einem Anzeigeschirm (1), einer Anwahl- und Auswahlvorrichtung (6) mit einer Kontrolltaste (5) zur Auswahl und zum Anzeigen des bezeichneten Elements durch Überlagerung seines Darstellungsfensters mit dem feststehenden Zeiger im Zentrum des bezeichneten dreidimensionalen Objekts.

9. Vorrichtung zum Auswählen und Anzeigen nach Anspruch 8, **dadurch gekennzeichnet, dass** die Anwahlvorrichtung eine Maus, ein Joystick oder ein Trackball ist.
